# EUROPEAN PATENT APPLICATION

(11) **EP 3 754 533 A1**
(43) Date of publication of application: **23.12.2020**
(21) Application number: 20176220.0
(22) Date of filing: 25.05.2020
(51) Int. Cl.: G06F 30/17, G06F 119/20

(54) **DESIGN ASSISTANCE APPARATUS AND DESIGN ASSISTANCE METHOD**

(30) Priority: 21.06.2019 JP 2019115277
(71) Applicant: Hitachi, Ltd., Tokyo 100-8280 (JP)
(72) Inventor: ONODERA, Makoto, Tokyo, 100-8280 (JP); ITABAYASHI, Yuki, Tokyo, 100-8280 (JP); KONGOU, Chikara, Tokyo, 100-8280 (JP); SHINTANI, Masaki, Tokyo, 100-8280 (JP); KAWAMOTO, Hiroki, Tokyo, 100-8280 (JP)
(74) Representative: MERH-IP Matias Erny Reichl Hoffmann Patentanwälte PartG mbB

(57) **Abstract**

A plurality of 3D CAD data which has been commercialized in the past and released is extracted according to a design rule. A main feature amount is measured for each of the plurality of 3D CAD data extracted. A related feature amount defined according to the main feature amount is acquired or measured for each of the plurality of 3D CAD data extracted. A statistical value based on the main feature amount and the related feature amount is calculated. The statistical value is visualized in order to identify an allowable range of the main feature amounts or related feature amounts that are highly related to the main feature amount.

## Description

### BACKGROUND OF THE INVENTION

### 1. Field of the Invention

The present invention relates to a design assistance apparatus and a design assistance method for assisting quantification of an unquantified design rule.

### 2. Description of the Related Art

In product design, the three-dimensional computer aided design (CAD) is widely used as a design tool. The three-dimensional CAD (hereinafter, referred to as the 3D CAD) is a tool for creating a product shape on a computer, and can freely define the shape according to a designer's intention. However, in product design, it is necessary to consider manufacturing requirements of machine tools and production technology, and design requirements such as strength, temperature and safety, and define product shapes that satisfy a plurality of requirements through trial and error. Such requirements that the designer must observe are referred to herein as a "design rule".

When the designer has little experience, or in a design process where many design rules must be considered within a limited design period, the design rule is likely to be overlooked, resulting in design rework, and in some cases, a process is delayed, or a defect is found after the product is shipped, causing a recall. Alternatively, a possibility of performance improvement or cost reduction may be overlooked even if there is the possibility, thereby suffering the opportunity loss.

Therefore, the following prior arts exist in order to prevent design rules from being missed in product design. JP 2007-102282 A discloses a device capable of performing a shape comparison between a restriction on the size allowed in manufacturing, a restriction on the arrangement distance allowed in manufacturing between feature shapes, and a restriction on the arrangement distance allowed in manufacturing between the feature shape and the model outer edge or bend, and the feature shape created by the user, performing differentiated display of the target location on the display device when the shape created by the user does not conform to the manufacturing restrictions, proposing, in addition, a group of improvement plans for modifying the size and arrangement distance, and according to an improvement plan selected by the user from the group of improvement plans, changing (deforming) a shape by changing the size or the arrangement distance or adding a new shape. HARIYA, M. et al., "Technique for Checking Design Rules for Three-Dimensional CAD Data", Proc. IEEE Conf. Computer Science and Information Technology (ICCSIT), pp. 296-300, 2010 discloses a device that clarifies the design rule check procedure, develops a check program (software) for each design rule, and displays a design rule violation part on the 3D CAD. As a result, it is possible to check the design requirements at the timing when the 3D CAD model is created, and it is possible to reduce the occurrence of defects in a later process.

### SUMMARY OF THE INVENTION

However, in the technology described in JP 2007-102282 A, and HARIYA, M. et al., "Technique for Checking Design Rules for Three-Dimensional CAD Data", Proc. IEEE Conf. Computer Science and Information Technology (ICCSIT), pp. 296-300, 2010, as various restrictions and design rules (hereinafter collectively referred to as the design rule), threshold values of the feature amounts, for example, a dimension value such as a distance, a position, a curvature, and an angle, and an attribute value such as a material and a manufacturing factory must be specified in advance. However, some design rules are ambiguous and the unique threshold value may not be known. For example, in the design rules, such as "to provide a sufficient space between a component X and a component Y to avoid the collision when vibrating" and "to have a thickness of the injection-molded component such that sink marks do not occur on the design side", the threshold value is not quantified although the type of the feature amount is clear.

For this reason, in order to automatically check the design rule, it is necessary to quantify the design rule whose feature amount threshold value is ambiguous. However, there may be a plurality of factors in the design rule, and it is not easy to quantify the design rule by formalizing the combination. In particular, it is not easy to extract a combination of feature amounts having a correlation or a causal relationship. Machine tools, materials, processing methods and the like may evolve with time, so that even though once quantified, it is necessary to review them permanently, and such maintenance takes time and effort.

The present invention has been made in view of the above circumstances, and an object of the present invention is to efficiently quantify the design rule.

In order to solve the above problem, for example, a configuration described in the claims is adopted.

According to an embodiment of the present invention, a design assistance apparatus that assists quantification of a threshold value of a main feature amount included in a design rule includes a processor, a memory, and a design rule quantification program stored in the memory and configured to be executed by the processor, wherein the design rule quantification program includes a three-dimensional CAD data group extraction unit, a main feature amount measurement unit, a related feature amount extraction unit, a statistical value calculation unit, and a statistical value visualization unit, the three-dimensional CAD data group extraction unit extracts, according to the design rule, a plurality of three-dimensional CAD data commercialized in the past and released, the main feature amount measurement unit measures the main feature amount for each of the plurality of three-dimensional CAD data that are extracted, the related feature amount extraction unit acquires or measures a related feature amount defined according to the main feature amount for each of the plurality of three-dimensional CAD data that are extracted, the statistical value calculation unit calculates a statistical value based on the main feature amount and the related feature amount, and the statistical value visualization unit visualizes the statistical value in order to identify an allowable range of the main feature amount or the related feature amount highly relevant to the main feature amount.

### Advantageous Effects of Invention

Efficient derivation of a possible range of the feature amount or a combination of highly relevant feature amounts from past design assets, and more efficient quantification of the design rule are achieved.

Other objects and novel features will be apparent from the description of this specification and the accompanying drawings.

### BRIEF DESCRIPTION OF DRAWINGS

Fig. 1 is an example of a design environment in which a design assistance apparatus is used;
Fig. 2 is an example of a hardware configuration of a design assistance apparatus;
Fig. 3 is a diagram showing a table structure of main feature amount data;
Fig. 4 is a diagram showing an example of visualized statistical value data;
Fig. 5A is an example of 3D CAD data;
Fig. 5B is an example of 3D CAD data;
Fig. 5C is an example of 3D CAD data;
Fig. 6 is an example of the main feature amount data;
Fig. 7 is an example of related feature amount data;
Fig. 8 is an example of visualized statistical value data; and
Fig. 9 is an example of visualized statistical value data.

### DESCRIPTION OF THE PREFERRED EMBODIMENTS

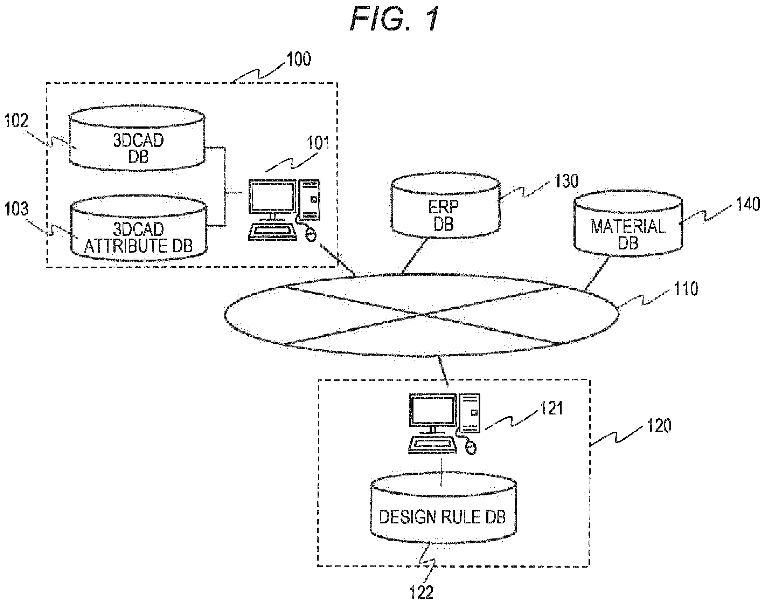

Fig. 1 shows an example of a design environment in which the design assistance apparatus according to the present embodiment is used. A design system 100 includes a design apparatus 101 that designs a three-dimensional shape of a component or member using the 3D CAD. A 3D CAD database 102 stores 3D CAD data which is shape information (a three-dimensional model) of a design target designed by the design apparatus 101. Further, a 3D CAD attribute database 103 stores design target names and attribute information. Since the 3D CAD data stored in the DB102 is only the shape information that represents the design target with faces, lines, and points, so that the attribute information other than the shape information is stored in the DB 103 in association with the 3D CAD data.

A design assistance system 120 has a design assistance apparatus 121 that quantifies the design rule to be followed when the design apparatus 101 performs design by the 3D CAD. The design rule database 122 stores the design rule that the design department or designer is required to observe for the design target. The design rule may be defined individually for the design targets or may be commonly defined for many design targets. It does not matter whether the design rule is quantified or not. Here, an example in which a database is stored as an electronic file is shown, but there are also cases in which the design rule is held in a paper medium or as know-how. The design rule may be held in any medium, but the design rule quantified by the design assistance apparatus of the present embodiment is ultimately stored and held in the DB 122. It is desirable that the design system 100 and the design assistance system 120 be connected by a network 110.

It is desirable that furthermore, an enterprise resources planning (ERP) database 130 and a material database 140 be connected to the network 110, and the design assistance system 120 can access the ERP DB 130. The ERP DB 130 includes production information, purchase information, inventory information, sales information, and the like of the design target. The material DB 140 includes information such as the physical properties of the materials used for the component. In this case, such information can be used as the feature amount described later.

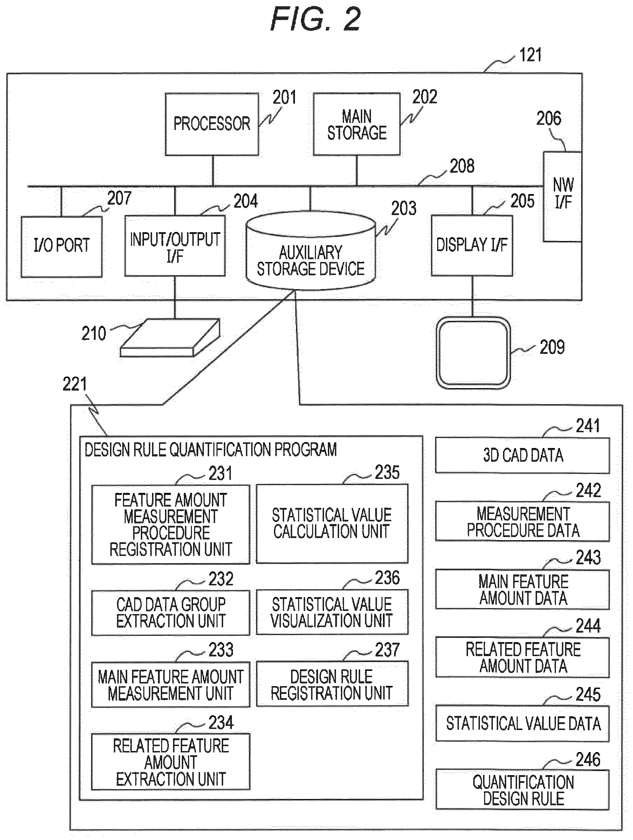

Fig. 2 shows an example of a hardware configuration of the design assistance apparatus 121. The design assistance apparatus 121 includes a processor 201, a main storage 202, an auxiliary storage device 203, an input/output interface 204, a display interface 205, a network interface 206, and an input/output (I/O) port 207, which are connected by a bus 208. The input/output interface 204 is connected to an input device 210 such as a keyboard or a mouse, and the display interface 205 is connected to a display 209, thereby implementing a graphical user interface (GUI). The network interface 206 is an interface which is connected to the network 110. The auxiliary storage device 203 is usually constituted by a nonvolatile memory such as a hard disk drive (HDD), a read only memory (ROM), and a flash memory, and stores a program executed by the design assistance apparatus 121, data to be processed by the program, and the like. The main storage 202 is constituted by a random access memory (RAM), and temporarily stores the program and the data necessary for executing the program by the command of the processor 201. The processor 201 executes a program loaded from the auxiliary storage device 203 to the main storage 202. The design assistance apparatus 121 can be realized by, for example, a personal computer (PC) or a server.

The auxiliary storage device 203 stores a design rule quantification program 221. The program may be stored in an optical recording medium such as a compact disc (CD) or a digital versatile disc (DVD) via an optical drive connected to the I/O port 207, or the program stored in the magnetic recording medium via an external HDD may be stored in the auxiliary storage device 203, or may be stored in the auxiliary storage device 203 via the network 110. In the auxiliary storage device 203 stores, as the data or the program used by the design rule quantification program 221 or generated by the program, 3D CAD data 241 designed in the past, measurement procedure data 242 for measuring the feature amount from the 3D CAD data, main feature amount data 243, related feature amount data 244, statistical value data 245, and quantified design rule 246. Details of these will be described later. In the present embodiment, the function of the design assistance apparatus 121 is realized by cooperating the specified processing with other hardware with the program stored in the auxiliary storage device 203 executed by the processor 201. A program executed by a computer or the like, its function, or means for implementing the function may be referred to as a "function", a "unit", a "module", or the like.

Hereinafter, processing executed by the design rule quantification program 221 will be described.

### (1) Feature amount measurement procedure registration unit 231

The feature amount measurement procedure registration unit 231 defines a procedure for measuring the feature amount of the 3D CAD data 241 acquired from the 3D CAD data DB 102, and stores it as the measurement procedure data 242. Here, dimensional parameters, such as a length, a distance, a thickness, an angle, a radius or a diameter, a curvature, a position, and an orientation, which are specified when creating the 3D CAD data, shape characteristic parameters such as a volume and an area, a center of gravity, and a geometrical moment of inertia, number parameters such as the number of feature shapes such as a hole and boss and the number of interferences, and attribute parameters such as material properties and material constants, a surface treatment, a manufacturing base, a shipping area, a supplier, costs are collectively referred to as the feature amount. A procedure for acquiring or measuring such feature amounts from the shape information stored in the 3D CAD data DB 102, the attribute information stored in the 3D CAD attribute DB 103, or various management information stored in the ERP DB 130 is defined. For example, in the case of a procedure for measuring the number parameter and the like, a procedure for measuring the feature amount can be defined by identifying the target part to be measured using an application program interface (API) and a macro function that are included in many 3D CADs. The measurement procedure data 242 may be a program (software) or a measurement procedure definition document that defines a procedure using a programmingless development tool. In the present embodiment, regardless of the format, a procedure (program or data) for measuring the feature amount is referred to as measurement procedure data 242. Further, the number of feature amounts defining the measurement procedure for quantifying the design rule is not limited.

In the case of the procedure for measuring the minimum gap between the component X and the component Y, for example, the following steps 1 to 3 are registered as the measurement procedure data 242.
Step 1: Search for the component X;
Step 2: Search for the component Y;
Step 3: Calculate the minimum distance between the component X and the component Y.

### (2) CAD data group extraction unit 232

The CAD data group extraction unit 232, from the viewpoint of quantifying design rule, searches for the relevant past designed 3D CAD data from the 3D CAD data DB 102 and extracts it. Search conditions can be set in consideration of the design rule to be quantified by the designer. For example, when measuring the minimum gap between the component X and the component Y described above, a plurality of CAD data including the component X and the component Y is specified. Here, the plurality of CAD data is desirably all or most of the CAD data that was commercialized in the past and released. However, CAD data that is obviously not useful (for example, CAD data that is too old) may be excluded. In this embodiment, since statistical values from past design assets are used to quantify the design rule, basically, the more the number of the data, the better, and on the other hand, it is desirable to exclude data that becomes noise in advance. Based on this idea, the designer determines the range of the 3D CAD data to be extracted.

### (3) Main feature amount measurement unit 233

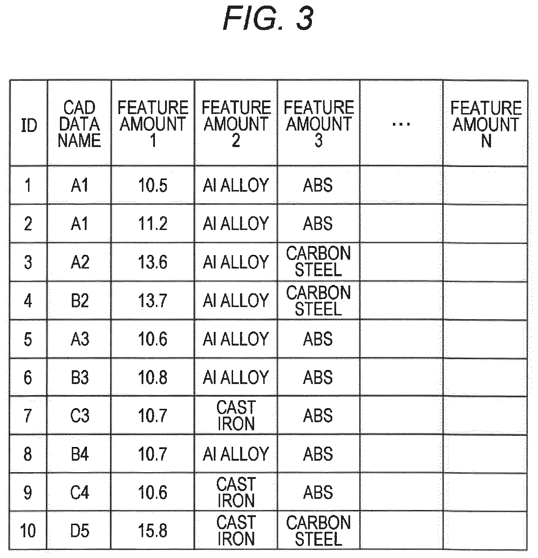

The feature amount to be quantified in the quantification design rule 246 to be created is herein referred to as a "main feature amount". The main feature amount measurement unit 233 measures the feature amount using the measurement procedure data 242 for the 3D CAD data 241 extracted by the CAD data group extraction unit 232, and registers it as the main feature amount data 243. Fig. 3 shows a table structure of the main feature amount data 243. In this example, it is assumed that N main feature amounts are defined, and the feature amount 1 is the minimum distance between the component X and the component Y, the feature amount 2 is the material of the component X, and the feature amount 3 is the material of the component Y. In addition, one or more sets of the main feature amounts are measured for nine types of 3D CAD data. For example, the CAD data A1 has two sets (ID1, 2) of main feature amounts. For example, in a case where the feature amount 1 is a distance between a hole in the component X and a hole in the component Y, when the component X and the component Y each have a plurality of holes, sets of main feature amounts corresponding to the number of these combinations are obtained.

### (4) Related feature amount extraction unit 234

The related feature amount extraction unit 234 acquires or measures various feature amounts related to the main feature amount (referred to as "related feature amounts") for the 3D CAD data extraction by the CAD data group extraction unit 232, and registers them as the related feature amount data 244. Note that the related feature amount is defined according to the main feature amount. For example, the related feature amount includes the following.

### - Another feature amount related to the shape in which the main feature amount is measured (first related feature amount group)

When the main feature amount is the minimum distance between the component X and the component Y, the shapes to be measured are the shapes of the component X and the component Y. Therefore, the feature amounts related to the component X and the component Y are comprehensively extracted from the shape information stored in the 3D CAD data DB 102, the attribute information stored in the 3D CAD attribute DB 103, or various management information stored in the ERP DB 130. The feature amount related to a combination of the component X and the component Y, or the feature amount of each of the component X and the component Y may be extracted. For example, the angles of the main axes of the component X and the component Y, the material constant (strength, conductivity, etc.), the thickness, the supplier, and the like of each component may be extracted.

### - The feature amount related to the shape in which the main feature amount is measured and another shape in the vicinity thereof (second related feature amount group)

When the main feature amount is the distance between the hole V and the hole W, the shape to be measured is two holes (the hole V and the hole W). It indicates the feature amount between two shapes, such as a distance and an angle with respect to the shape near the holes V and W. For example, it is conceivable that the related feature amount is a distance from a sheet metal end near the hole, a distance from a welding point near the hole, a gap (distance) from a bolt passing through the hole, of the like.

It is desirable that these related feature amounts are comprehensively extracted. For this reason, parameters to be extracted for the first related feature amount group are comprehensively specified in advance. For the second related feature amount group, as described in the feature amount measurement procedure registration unit 231, the measurement of the feature amount can be automatically performed by creating measurement procedure data in advance. In the previous example, another shape near the hole that is the shape to be measured may be comprehensively extracted, and measurement procedure data for measuring a distance from the extracted another shape may be created in advance.

Even when the first or second related feature amount groups to be extracted are predetermined, it is not necessary to always extract all of the first or second related feature amount groups, but the designer may be allowed to specify the related feature amount to be extracted. Conversely, when related feature amounts that are not included in the first or second related feature amounts but is likely to be highly correlated with the main feature amount can be assumed, the measurement procedure data can be created with the same method as that described in the feature amount measurement procedure registration unit 231 in order to obtain or measure such related feature amounts individually. The related feature amount data 244 has the same table structure as the main feature amount data 243.

### (5) Statistical value calculation unit 235

The statistical value calculation unit 235 calculates the statistical values of main feature amount data 243 and related feature amount data 244, and registers them as statistical value data 245. Statistical values are summary statistical amounts such as the maximum value, the minimum value, the standard deviation, or are calculated by using the data mining represented by an association analysis, a cluster analysis, etc., or the statistical value analysis represented by a multiple regression analysis, a covariance structure analysis, and a principal component analysis. Various statistical amounts are calculated by combining these methods.

### (6) Statistical value visualization unit 236

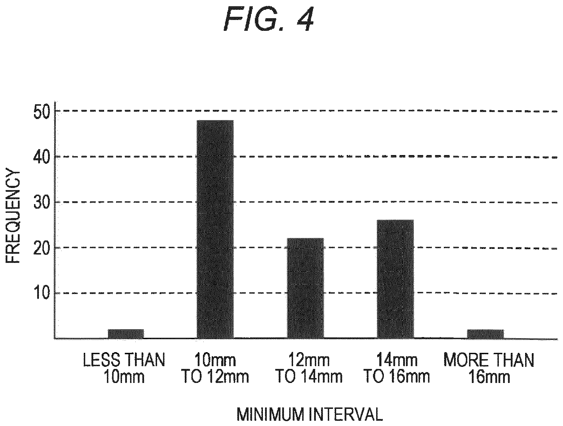

When displaying the statistical value data 245 on the display 209, the statistical value visualization unit 236 displays various statistical amounts in an easy-to-understand manner using a graph or the like. For example, for 100 previously-designed 3D CAD data, when visualizing the minimum distance between the component X and the component Y in the frequency graph, a graph as shown in Fig. 4 is displayed on the display 209.

### (7) Design rule registration unit 237

Once the threshold value of the main feature amount is determined based on statistical values from past design assets, the design rule registration unit 237 registers the quantification design rule 246 obtained by taking in and quantifying the threshold value set for the design rule in the design rule DB 122.

Next, an example of processing for assisting quantification of the design rule using the design assistance system of the present embodiment will be described. In this example, it is assumed that an ambiguous design rule is provided in which the pitch of the spot welding points is not quantified, and this quantification is assisted. When the interval between the spot welding points is too close, a short circuit may occur, resulting in poor welding. Electricity flows more easily at the place where the components are fused by welding than at other places. For this reason, when the interval between the spot welding points is too close, the current flowing for welding does not flow through the place to be newly welded, but flows through the already welded part (this is called a short circuit), so that almost no electricity flows to the place to be newly welded, which causes poor welding.

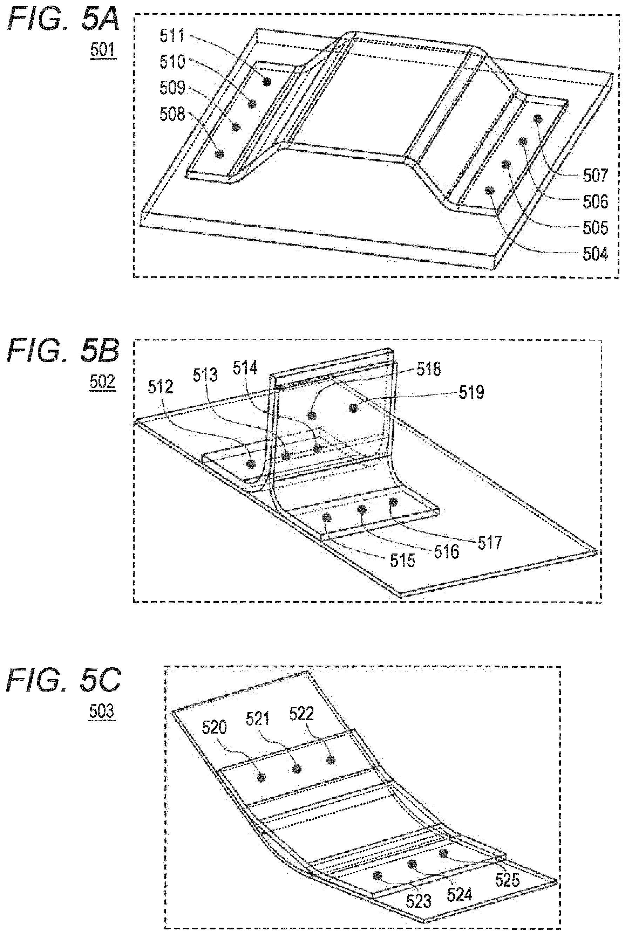

First, the CAD data group designation unit 232 searches for related 3D CAD data designed in the past from the 3D CAD data DB 102 and extracts it. The designer sets, for example, to include a spot welding point as an attribute as an extraction condition. Examples of the extracted 3D CAD data are shown in Figs. 5A to 5C. Points 504 to 525 shown in the 3D CAD data 501 to 503 indicate the positions of the spot welding points.

Subsequently, the designer creates measurement procedure data 242 for measuring the main feature amount by the feature amount measurement procedure registration unit 231. The main feature amount in this example is the distance between spot welding points included in the 3D CAD data. The procedure for obtaining the distance between the spot welding points is as follows.
Step 1: Obtain the spot welding point position in the 3D CAD data;
Step 2: Calculate the distance between any two points;
Step 3: Narrow down pairs of dots to a pair of dots whose distance between the dots is α mm or less;
Step 4: Calculates the creepage distance (pitch between spot welding points) for the spot pairs narrowed down in step 3.

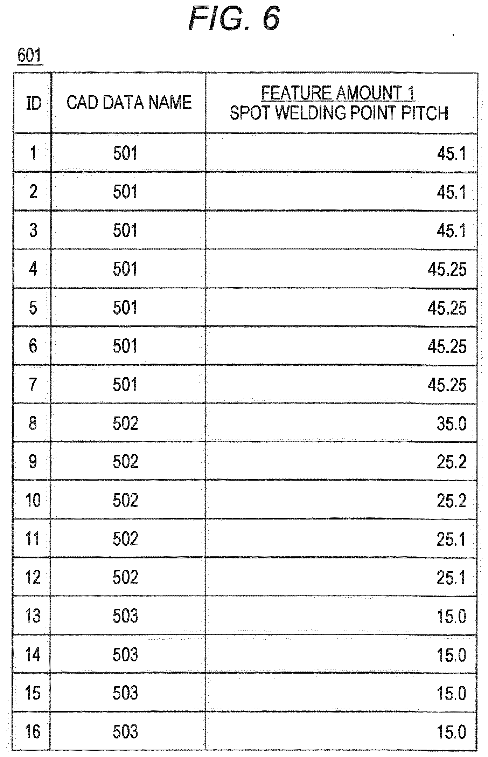

Subsequently, the main feature amount measurement unit 233 applies the measurement procedure data 242 on the extracted 3D CAD data 241, measures the main feature amounts, and registers them as the main feature amount data 243. In the case of the 3D CAD data 501 to 503 shown in Figs. 5A to 5C, the main feature amount data 601 shown in Fig. 6 is created.

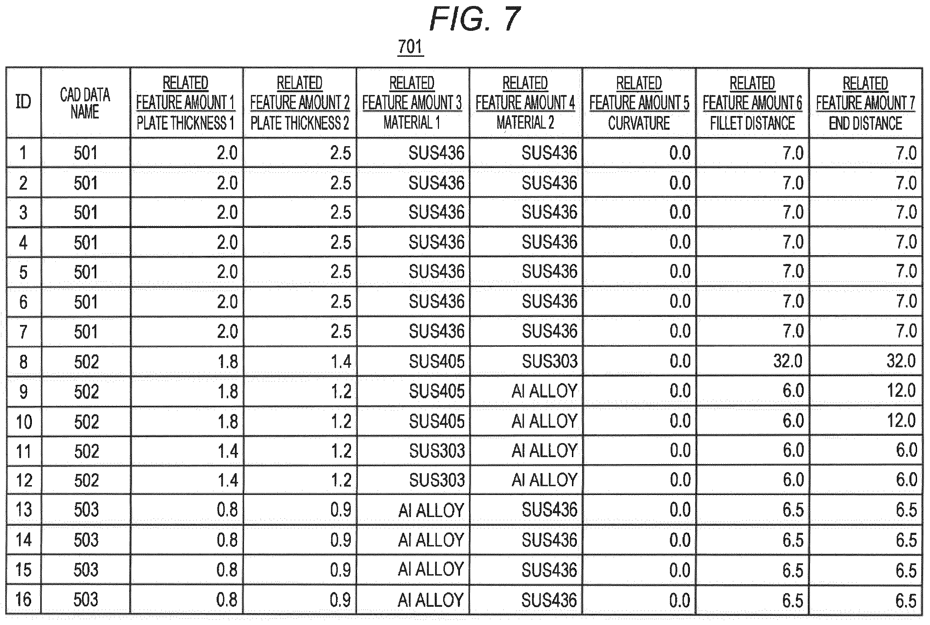

Subsequently, the related feature amount extraction unit 234 acquires or calculates a related feature amount for the extracted 3D CAD data 241 and registers it as the related feature amount data 244. It is assumed that for the distance between the spots of the spot welding points, which is the main feature amount, for example, as a first related feature amount group, the thickness of the welded component, the material of the welded component, and the curvature at the welding point are specified, and as the second related feature amount group, the distance between the welding point and the fillet surface, and the distance between the welding point and the end of the component are specified. As a result, for example, related feature amount data 701 shown in Fig. 7 is created.

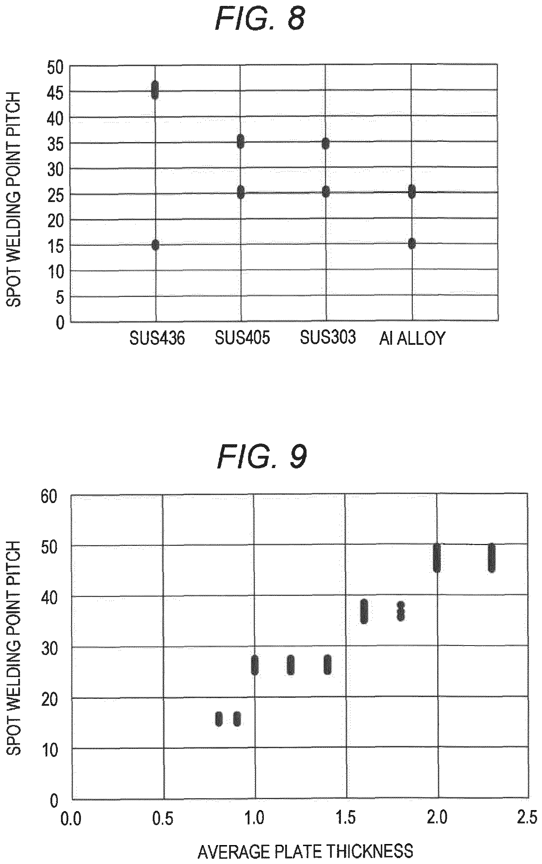

Subsequently, the designer calculates the statistical values of the main feature amount data 601 and the related feature amount data 701 using the statistical value calculation unit 235, and registers the statistical value as the statistical value data 245. There are various statistical calculation methods, and the designer selects which method to use. The statistical value calculation unit 235 includes a statistical value calculation menu to assist the designer in selecting the method. Fig. 8 is a graph showing the relationship between the welded component materials extracted from the related feature amount data 701 and the pitches between spot welding points (main feature amount data 601). For this graph, when a linear approximation line was calculated, this correlation coefficient was 0.62. On the other hand, Fig. 9 is a graph showing the relationship between the average plate thicknesses of the welded component extracted from the related feature amount data 701 and the pitches between spot welding points (main feature amount data 601). For this graph, when a linear approximation line was calculated, this correlation coefficient was 0.89.

Also, when performing a multiple regression analysis with respective related feature amount of the related feature amount data 701 for the pitch between spot welding points, the t value (degree of influence) was 0.88 (plate thickness), 0.08 (material), 0.00 (curvature), 0.02 (fillet distance), and 0.01 (end distance), respectively. Such a correlation coefficient or t value becomes a statistical value.

The statistical value visualization unit 236 displays the statistical value data 245 on the display 209. For example, the graphs shown in Figs. 8 and 9 are displayed on the display 209.

In this way, when attention is focused on the fact that the 3D CAD data that has been commercialized and released in the past satisfies the design rule, it is possible to suggest the design rule idea from the main feature amounts and the related feature amounts of such a 3D CAD data group, and it is possible to efficiently quantify the ambiguous design rule. For example, an allowable range of the main feature amount can be statistically extracted and the range can be determined. Also, in the example, since it can be recognized that the t value is high in particular between the pitch between the spot welding points and the plate thicknesses, it is suggested that the design rule for the pitch between the spot welding points is set to have quantitative restriction in relation to the thickness. As described above, in determining the quantified design rule, it is possible to efficiently extract a range of feature amounts or derive a combination of highly relevant feature amounts.

As described above, the present invention has been described in connection with the embodiments, but the present invention is not limited to the above description. For example, an example is shown in which the design apparatus 101 and the design assistance apparatus 121 are implemented by separate computers as the design environment, but they may be implemented by the same computer. Further, the design rule quantification program of the present embodiment may be implemented on a cloud, and is not limited to the implementation form of the program.

## Claims

1. A design assistance apparatus that assists quantification of a threshold value of a main feature amount included in a design rule, the design assistance apparatus comprising:
a processor (201);
a memory; and
a design rule quantification program (221) stored in the memory and configured to be executed by the processor (201),
wherein
the design rule quantification program (221) includes a three-dimensional CAD data group extraction unit (232), a main feature amount measurement unit (233), a related feature amount extraction unit (234), a statistical value calculation unit (235), and a statistical value visualization unit (236),
the three-dimensional CAD data group extraction unit (232) extracts, according to the design rule, a plurality of three-dimensional CAD data (241) commercialized in the past and released,
the main feature amount measurement unit (233) measures the main feature amount for each of the plurality of three-dimensional CAD data (241) that are extracted,
the related feature amount extraction unit (234) acquires or measures a related feature amount defined according to the main feature amount for each of the plurality of three-dimensional CAD data (241) that are extracted,
the statistical value calculation unit (235) calculates a statistical value based on the main feature amount and the related feature amount, and
the statistical value visualization unit (236) visualizes the statistical value in order to identify an allowable range of the main feature amount or the related feature amount highly relevant to the main feature amount.

2. The design assistance apparatus according to claim 1, wherein
the design rule quantification program has a feature amount measurement procedure registration unit (231),
the feature amount measurement procedure registration unit (231) defines a procedure for measuring a feature amount for the three-dimensional CAD data (241) to create measurement procedure data (242), and
the main feature amount measurement unit (233) measures the main feature amount using the measurement procedure data(242).

3. The design assistance apparatus according to claim 1, wherein
the main feature amount or the related feature amount includes a dimension parameter, a shape characteristic parameter, a number parameter, and an attribute parameter.

4. A design assistance method for assisting quantification of a threshold value of a main feature amount included in a design rule, the design assistance method comprising:
extracting, according to the design rule, a plurality of three-dimensional CAD data (241) commercialized in the past and released;
measuring the main feature amount for each of the plurality of three-dimensional CAD data (241) that are extracted;
acquiring or measuring a related feature amount defined according to the main feature amount for each of the plurality of three-dimensional CAD data (241) that are extracted;
calculating a statistical value based on the main feature amount and the related feature amount; and
visualizing the statistical value in order to identify an allowable range of the main feature amount or the related feature amount highly relevant to the main feature amount.

5. The design assistance method according to claim 4, wherein
a procedure for measuring a feature amount for the three-dimensional CAD data (241) is defined to create measurement procedure data(242), and
the main feature amount is measured using the measurement procedure data(242).

6. The design assistance method according to claim 4, wherein
the main feature amount or the related feature amount includes a dimension parameter, a shape characteristic parameter, a number parameter, and an attribute parameter.
